# FASCICULE DE BREVET EUROPEEN

(11) **EP 0 448 484 B1**
(45) Date de publication et mention de la délivrance du brevet: **08.06.1994**
(21) Numéro de dépôt: 91420093.6
(22) Date de dépôt: 20.03.1991
(51) Int. Cl.: B23Q 11/08

(54) **Dispositif d'étanchéité pour un module linéaire de guidage pour la translation et la manutention de toutes pièces et accessoires**
Schutzabdeckung für einen linearen Führungsmodul zum Verschieben und Handhaben von Teilen und Zubehör
Protective covering for a linear guide module for translation and manipulation of pieces and accessories

(30) Priorité: 22.03.1990 FR 9003984
(43) Date de publication de la demande: 25.09.1991
(73) Titulaire: KINETIC TECHNOLOGIES, F-42000 Saint-Etienne (Loire) (FR)
(72) Inventeur: Coron, Jean-Paul, F-69440 Saint Maurice sur Dargoire (FR)
(74) Mandataire: Dupuis, François

(56) Documents cités:
- DE-A- 3 109 084
- DE-A- 3 815 595
- DE-U- 7 533 338
- DE-U- 8 806 099

## Description

L'invention se rattache au secteur technique des moyens de manutention et de déplacement en ligne de pièces trouvant notamment des applications dans les automatismes et en particulier pour les machines, machines-outils, centres d'usinage à commande numérique, robots industriels et tous systèmes d'alimentation automatiques, appareils de mesure, manipulateurs, et concerne un module linéaire de guidage selon le préambule de la revendication 1(DE-U-8 806 099).

Le concept de module linéaire, de transfert et de manutention, est connu depuis de très nombreuses années et est largement exploité, notamment dans les secteurs techniques précités. Il s'agit en général d'éléments prêts à monter qui sont fixés sur un plan d'appui par leur partie basse inférieure et qui sont agencés avec une structure profilée autorisant un déplacement alternatif en va et vient selon un cycle déterminé d'un chariot sur lequel est fixée une ou des pièces ou outils ou autres, susceptible de fonctionner et d'intervenir selon un cycle préétabli dans un mouvement de va et vient continu.

La structure précitée du module présente intérieurement un espace pour le guidage et déplacement du chariot transfert. On utilise des systèmes de guidage et d'entraînement du type vis à billes, galets et autres, ou courroie crantée ou vérins.

Pour assurer une protection du module linéaire, et en particulier de ses mécanismes intérieurs, il est utilisé des bandes de protection, dans le cas du chariot monté sur une vis à billes, ou ce sont les courroies d'entraînement du chariot elles-mêmes qui assurent la protection des mécanismes à l'intérieur de la structure. Les courroies d'entraînement sont par exemple nontées entre deux tambours ou galets de renvoi ou similaires, situés près des extrémités à l'intérieur du module linéaire. Les courroies sont associées fixement au chariot transporteur par tous moyens de liaison appropriés. Ces derniers sont agencés généralement avec une fente horizontale établie dans toute leur longueur pour permettre le passage des courroies. C'est par exemple le cas du nodule linéaire décrit dans le Brevet allemand 3.815.595.

En variante, les bandes ou courroies peuvent éventuellement poursuivre un profil spécifique tout en restant dans le même plan horizontal.

En pratique et même si les dimensions des courroies ou bandes sont parfaitement établies, il existe toujours un jeu ou espace qui provoque des ruptures d'étanchéité par rapport à la structure porteuse, de sorte que cela peut constituer une gêne à l'emploi du module et en détériorer les mécanismes par l'infiltration de substances inappropriées.

Dans le cadre de courroies, il y a lieu de noter que ce sont des pièces en mouvement apparentes qui peuvent nuire à la sécurité des utilisateurs, et qui sont source d'usure elles-mêmes et de leur environnement.

Il existe également des systèmes à soufflets qui sont alors encombrants et limitent la course d'utilisation, selon une perte de 20 à 30 % selon les produits existant actuellement sur le marché.

Par ailleurs, lorsque les modules trouvent des applications a ces machines générant par leur fonctionnement des projections de débris, copeaux et similaires, ces derniers sont recueillis entre les spires successives des soufflets entraînant une dégradation rapide des soufflets et une réduction progressive de la course.

Pour tenter de remédier à ces problèmes, le brevet allemand 3.815.595 propose une solution complexe où la bande ou courroie est intégrée sous le plateau supérieur du chariot, en étant associée à ce dernier, les extrémités de la bande ou courroie étant introduites ou guidées dans des profils d'étanchéité rapportés très particuliers fixés par clipsage à la structure porteuse. Le plateau supérieur du chariot recouvre alors en totalité la partie supérieure de la structure. Un tel agencement est complexe, d'un entretien et montage peu pratiques. On note également que l'ouverture de la structure porteuse correspond au maximum de sa largeur intérieure, ceci pour permettre le montage précité, ce qui entraîne une réduction de l'inertie du corps du module.

On connait par ailleurs un module de guidage avec dispositif d'étanchéité tel que défini par DE-U-8 806 099.3 qui prévoit la fixation de la bande d'étanchéité par ses extremités aux parties extremes du corps du module en se developpant dans un plan horizontal. Cependant l'étanchéité n'est pas complète en cas de deplacement du traînard.

Le but recherché selon l'invention, était de concevoir un nouveau module linéaire perfectionné répondant de manière très spécifique et avantageuse, notamment aux problèmes d'étanchéité précités.

Un autre but de l'invention était de limiter la largeur de la fente supérieure de la structure porteuse pour augmenter l'inertie du corps des modules.

Ces buts et d'autres encore ressortiront bien de la suite de la description.

Selon l'invention, ces buts sont atteints dans un module linéaire de guidage selon le préambule de la revendication 1 en ce que le trainard presente intérieurement des moyens disposés dans l'ouverture profilée pour autoriser le vrillage et la mise en position verticale ou oblique de la bande sur la plus grande partie de la longueur du trainard.

Selon une forme de réalisation avantageuse, la partie supérieure du trainard présente une ouverture profilée de passage de la bande avec différentes sections intérieures pour autoriser le passage et la mise en forme de la bande de protection d'un plan horizontal à un plan vertical ou oblique.

Selon une autre forme de réalisation avantageuse, les extrémités de la bande de protection et d'étanchéité sont engagées et maintenues dans des profils formés sur les bords extérieurs du corps définissant une fente du passage du trainard.

Ces caractéristiques et d'autres encore ressortiront bien de la suite de la description.

Pour fixer l'objet de l'invention illustré d'une manière non limitative aux figures des dessins où :

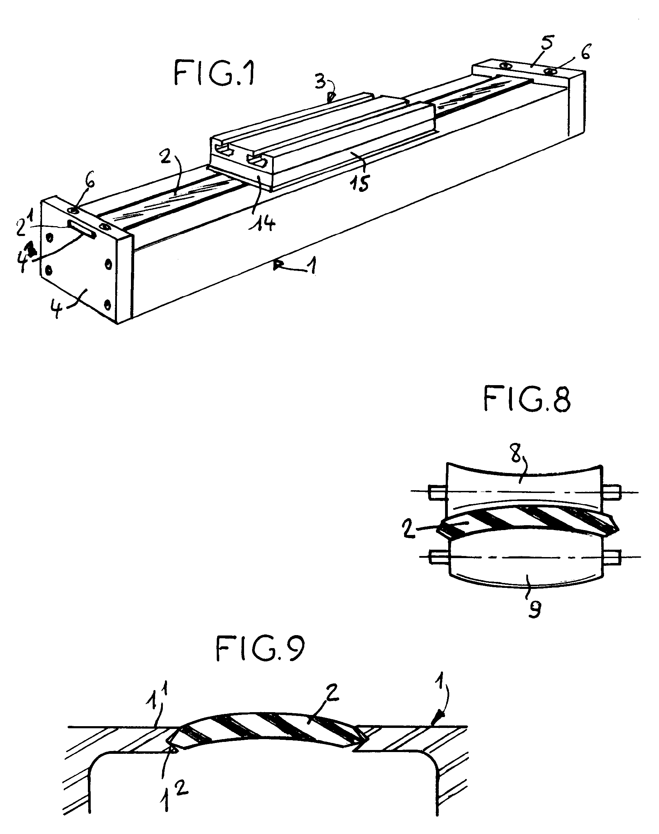

La figure 1 est une vue en perspective du module linéaire de guidage selon l'invention, avec le dispositif d'étanchéité.

La figure 2 est une vue en coupe longitudinale selon la ligne 1-1 de la figure 1 montrant le dispositif d'étanchéité quel que soit le moyen assurant la translation du trainard.

Les figures 3, 4, 5, 6 et 7 sont des vues en coupe transversale selon les lignes 3-3, 4-4, 5-5, 6-6, 7-7 de la figure 2, pour la partie correspondante à la mise en oeuvre du dispositif d'étanchéité.

La figure 8 est une vue partielle à caractère schématique illustrant la conformation de la bande de protection et d'étanchéité avant mise en forme à l'intérieur du chariot.

La figure 9 est une vue partielle à caractère schématique illustrant le positionnement de la bande de protection et d'étanchéité hors chariot.

Afin de rendre plus concret l'objet de l'invention, on le décrit maintenant d'une manière non limitative en se référant aux exemples de réalisation des figures des dessins.

Le module linéaire de guidage comprend un corps ou structure (1) porteuse parallélépipédique réalisé en tous matériaux. Ce corps creux intérieurement présente, sur sa face supérieure (1-1), une fente horizontale ou ouverture autorisant le positionnement d'une bande d'étanchéité et de protection (2) et le passage de la partie supérieure de la table ou trainard (3) susceptible de recevoir des pièces ou accessoires.

Le trainard est monté à déplacement limité et contrôlé à l'intérieur du corps. Les différents moyens utilisés ne sont pas décrits dans la présente Demande, ni illustrés. Le déplacement peut être effectué par vis, vérins, courroies ou autres, le corps étant alors adapté aux moyens d'entraînement.

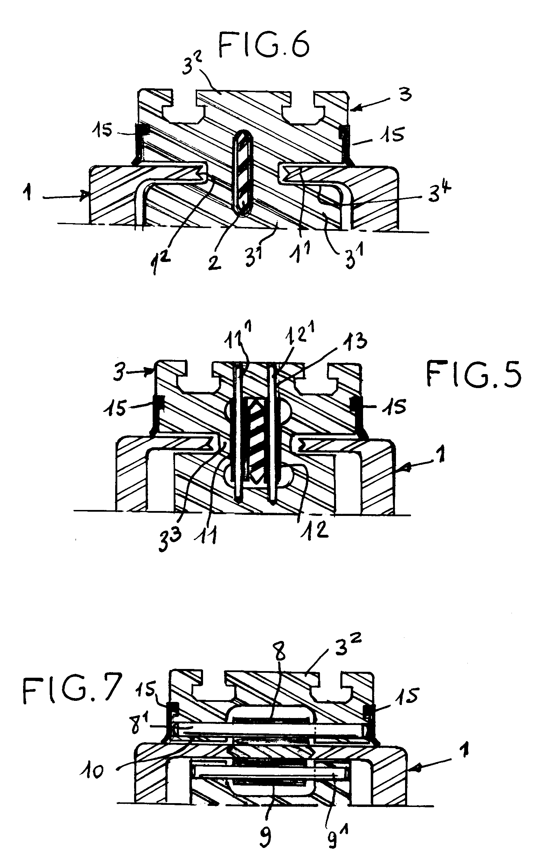

Ainsi qu'il apparaît à la figure 4, les bords supérieurs (1.2) définissant la fente de passage et de positionnement de la bande de protection, sont établis avec un profil en V ou curviligne pour assurer le maintien et la tenue de ladite bande de protection.

Les extrémités latérales du corps ou structure sont agencées avec des flasques avant et arrière (4 et 5) qui sont fixés audit corps par tous moyens de liaison appropriés.

Les flasques sont agencés et profilés pour venir fermer et obturer les extrémités du corps (1) et sont fixés à ce dernier par des vis de liaison.

Le module linéaire permet le déplacement longitudinal contrôlé d'un organe appelé trainard (3) qui est susceptible d'être déplacé le long du corps en mouvement de va et vient selon un cycle prédéterminé. Pour assurer ce déplacement, le trainard qui sera décrit plus spécifiquement, est réalisé sous la forme d'un ensemble nonobloc en tout matériaux et par exemple en aluminium. Ce trainard présente deux parties distinctes à savoir une base (3-1) profilée pour coopérer avec des moyens de déplacement non illustrés, et est agencé, en outre, dans sa partie supérieure (3-2) dans le prolongement de la précédente avec un profil intérieur très particulier qui permet le passage, guidage et orientation de la bande d'étanchéité de protection (2), successivement dans des plans différents : horizontal, vertical ou oblique, puis horizontal.

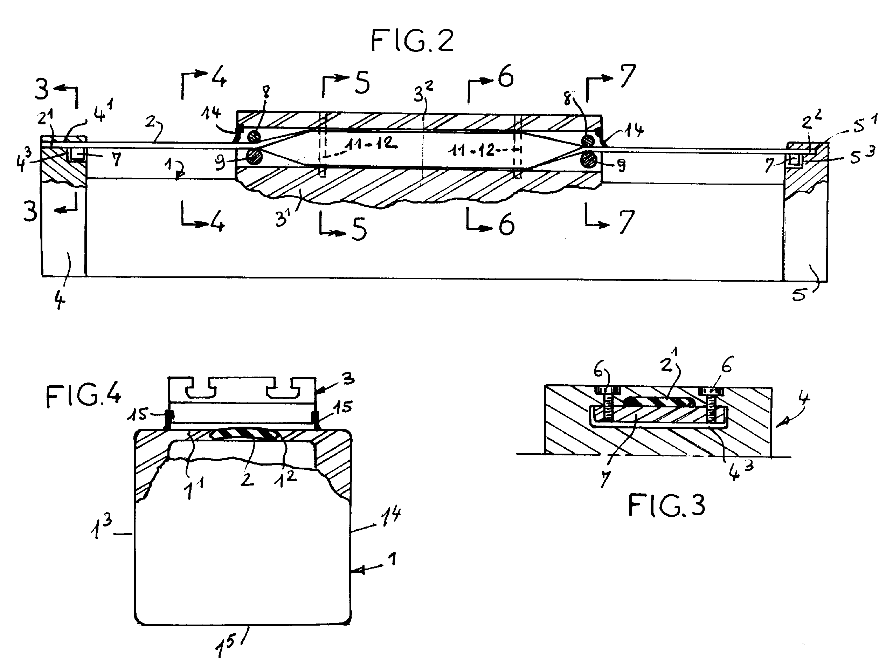

Le but selon l'invention est d'assurer sur toute la longueur du corps du module une étanchéité totale. A cet effet, selon l'invention, on utilise une bande de protection et d'étanchéité (2) qui peut être à profil plat, ou de préférence bombée, ainsi que représenté figures 8 et 9. Cette bande est insérée et maintenue par le profil spécifique (1-2) des bords supérieurs du corps du module. La bande est engagée, guidée dans le trainard avec une modification de sa position et une orientation de celle-ci dans un plan différent ainsi qu'il apparaît figure 2. Il y a lieu de remarquer que la modification de la position de la bande de protection et d'étanchéité n'est possible que par la conformation très particulière du profil intérieur de la partie supérieure du trainard et ne s'effectue qu'à l'intérieur du volume de cette dernière.

Plus spécifiquement, la largeur de la fente (1-1) formée à la partie supérieure du corps est limitée de sorte que le trainard (3) est aménagé avec une base inférieure située à l'intérieur du corps du module en se prolongeant par un étranglement (3-3) puis en débouchant à l'extérieur du corps pour constituer une table d'appui des pièces et accessoires. Ainsi le trainard présente de part et d'autre de son plan médian, deux fentes ou échancrures (3-4) s'engageant autour du profil des bords (1-2) supérieurs du corps. La partie intermédiaire du trainard est donc agencée avec une zone d'épaisseur réduite dans laquelle est conformée une ouverture profilée pour le passage, guidage et maintien de la bande de protection et d'étanchéité.

La bande de protection présente une légère capacité d'élasticité pour la mettre en tension et donc augmenter sa raideur. La mise en tension est obtenue par la fixation de la bande à l'une de ses extrémités et sa traction vers l'autre extrémité d'attache.

La bande de protection (2) est tout d'abord fixée par ses extrémités (2-1) (2-2) sur les flasques avant et arrière (4-5) précités. Les flasques sont en effet aménagés à leur partie supérieure avec des fentes ou lumières (4-1) (5-1) horizontales autorisant l'engagement et fixation des extrémités de la bande. Des moyens de liaison (6) et de fixation sont rapportés et associés à une barrette transversale (7) disposée dans un logement (4-3) (5-3) conforme dans chaque flasque pour permettre l'assemblage et l'attache de la bande sur le corps du module. Il y a lieu de noter que les fentes (4-1) (5-1) conformées dans les flasques se trouvent dans le même plan et prolongement des bords profilés (1-2) supérieurs du corps du module. Ainsi la bande qui est fixée par ses extrémités aux flasques recouvre totalement l'ouverture supérieure établie dans le corps du module en étant disposée sur toute la longueur du corps en position horizontale hors insertion dans le trainard.

Avantageusement, les extrémités de la bande peuvent présenter une partie crantée pour faciliter sa fixation avec les moyens d'attache.

Selon l'invention, le trainard est aménagé dans sa partie supérieure et sur toute sa longueur avec une ouverture profilée dont la forme et la section vont varier et être symétriques par rapport au plan médian transversal du trainard, ceci pour autoriser l'engagement de la bande de protection dans le trainard, suivant un plan horizontal, puis son vrillage afin de présenter la bande dans un plan vertical ou oblique sur la plus grande partie de la longueur du trainard, puis à nouveau son vrillage inverse pour présenter la bande à la sortie du trainard en plan horizontal.

Pour assurer cette mise en forme particulière, le trainard présente une ouverture intérieure dont le profil est successivement illustré aux figures 7, 5 et 6. Ces profils sont obtenus lors de la fabrication du trainard par toutes techniques connues.

A l'entrée ou à la sortie du trainard correspondant à la figure 7, la bande de protection et d'étanchéité (2) se présente horizontalement et est guidée à l'intérieur du trainard par des rouleaux (8) (9) horizontaux dont les axes (8-1) (9-1) de rotation sont insérés dans des logements (10) prévus à cet effet.

A l'entrée et à la sortie du trainard, la bande de protection est convenablement maintenue et guidée par le profil en V ou curviligne des bords supérieurs (1-2) du corps du module.

A la sortie des rouleaux (8) (9) situés dans la partie avant du trainard et à l'entrée des rouleaux (8) (9) situés dans la partie arrière du trainard, la bande de protection est vrillée en sens inverse, ainsi qu'il apparaît aux dessins pour venir en position verticale ou oblique. Des rouleaux (11) (12) disposés verticalement à l'intérieur de l'ouverture profilée du trainard assurent le maintien et guidage de la bande. A cet effet les axes de rotation (11-1) et (12-1) des rouleaux sont positionnés dans des logements (13) ménagés à cet effet dans le trainard. Le profil extérieur des rouleaux (8) (9) (11) (12) peut être plat ou bombé pour exercer une contrainte et pour s'adapter étroitement au profil de la bande de protection et assurer son guidage. L'ouverture de passage de la bande de protection est donc profilée pour s'adapter au passage et au développement de la bande de protection. De part cette disposition, la bande de protection et d'étanchéité se trouve en position verticale sur la plus grande partie de la longueur du trainard, à l'exception des extrémités. L'ouverture profilée est alors réduite à son minimum, et présente une forme oblongue qui est soit verticale ou oblique, ce qui permet de conserver le maximum de matière dans la zone intermédiaire du trainard en lui garantissant une plus grande rigidité pour tenir compte des efforts et sollicitations du module linéaire.

Ainsi qu'il apparaît par ailleurs, aux figures des dessins, des joints d'étanchéité (14) et (15) complémentaires sont disposés d'une part, longitudinalement entre la partie supérieure débordante du trainard et le corps supérieur du module et, d'autre part, transversalement entre la partie supérieure du trainard et la bande de protection proprement dite. La fixation des éléments d'étanchéité (14) (15) s'effectue de toute manière appropriée par clipsage par exemple ou autres, dans des logements établis à cet effet sur la partie supérieure du trainard.

En variante, on utilise une bande raboutée fixée par tous moyens et en particulier en utilisant sa capacité élastique de déformation, ladite bande étant disposée autour de la périphérie du trainard pour venir en contact sur la bande d'étanchéité sur le profil supérieur du corps.

Le module linéaire de guidage ainsi décrit est de construction simple et assure une totale étanchéité des mécanismes intérieurs.

Le dispositif d'étanchéité ainsi décrit peut être adapté sur des modules linéaires présentant un trainard de grande dimension et guidé en translation par plusieurs moyens de déplacement.

Il est en outre précisé une autre caractéristique que peut présenter la bande d'étanchéité. Celle-ci peut être agencée intérieurement avec un ou plusieurs inserts de renforcement réalisés par exemple sous forme câbles, de fibres, fibres de carbone ou autres matériaux composites. Ces inserts permettent avantageusement d'empêcher l'allongement de la bande suite à ses multiples manipulations lors du fonctionnement du dispositif linéaire de guidage dans lequel elle est associée.

## Revendications

1. Module linéaire de guidage avec un dispositif d'étanchéité du type comprenant un corps (1) profilé de grande longueur, recevant intérieurement, un moyen de guidage autorisant le déplacement contrôlé d'un (3) trainard profilé dont la partie supérieure déborde extérieurement du corps précité en étant susceptible de recevoir des pièces ou accessoires, une bande de protection (2) étant disposée sur la surface supérieure du corps pour assurer en liaison avec le déplacement du trainard, une protection des mécanismes disposés à l'intérieur du corps, le trainard étant agencé à sa partie inférieure pour coopérer avec un moyen assurant son déplacement contrôlé et limité, ledit trainard étant agencé à sa partie supérieure avec une ouverture profilée sur toute sa longueur pour autoriser le passage, guidage et orientation de la bande de protection et d'étanchéité, ladite bande étant fixée à ses extrémités aux parties extrêmes du corps du module en se développant dans un plan horizontal, caracterisé en ce que le trainard présente intérieurement, des moyens disposés dans l'ouverture profilée pour autoriser le vrillage et la mise en position verticale ou oblique de la bande sur la plus grande partie de la longueur du trainard.

2. Module linéaire avec dispositif d'étanchéité selon la revendication 1, caractérisé en ce que les extrémités de la bande de protection et d'étanchéité sont engagées et maintenues dans des profils formés sur les bords extérieurs du corps définissant une fente de passage du trainard.

3. Module linéaire avec dispositif d'étanchéité selon la revendication 1, caractérisé en ce que la partie supérieure du trainard présente une ouverture profilée de passage de la bande avec différentes sections intérieures pour autoriser le passage et la mise en forme de la bande de protection, d'un plan horizontal à un plan vertical ou oblique.

4. Module linéaire avec dispositif d'étanchéité selon la revendication 3, caractérisé en ce que des moyens sous forme de rouleaux sont disposés dans les différentes sections de l'ouverture profilée, des rouleaux (8) (9), étant disposés horizontalement avec des axes (8-1) (9-1) de rotation insérés dans des logements établis dans le trainard, lesdits rouleaux (8) (9) étant situés dans la partie avant et la partie arrière du trainard, et en ce que des rouleaux (11-12) sont disposés verticalement dans les sections profilées de l'ouverture à l'intérieur du trainard, pour autoriser le vrillage de la bande de protection et d'étanchéité et sa mise en position verticale ou oblique.

5. Module linéaire avec dispositif d'étanchéité selon la revendication 3, caractérisé en ce que les rouleaux (8) (9) (11) (12) ont un profil extérieur correspondant au profil de la bande de protection et d'étanchéité.

6. Module linéaire avec dispositif d'étanchéité selon la révendication 1, caractérisé en ce que le trainard est aménagé avec une base inférieure située à l'intérieur du corps du module en se prolongeant par un étranglement (3-3) disposé en regard des extrémités des bords supérieurs du corps du module et se prolongeant par sa partie supérieure à l'extérieur du corps du module pour recevoir et présenter des pièces et accessoires ; et en ce que dans la partie intermédiaire du trainard, est disposée l'ouverture profilée de passage de la bande de protection et d'étanchéité, et en ce que la base inférieure du trainard est agencée pour coopérer avec un moyen assurant sa translation dans le corps du module.

7. Module linéaire avec dispositif d'étanchéité selon la revendication 1, caractérisé en ce que des moyens complémentaires d'étanchéité (14) (15) sont disposés d'une part, longitudinalement entre la partie supérieure débordante du trainard et le corps supérieur du module et, d'autre part, transversalement entre la partie supérieure du trainard et la bande de protection.

8. Module linéaire avec dispositif d'étanchéité selon la revendication 1, caractérisé en ce que les parties extrêmes du corps comprennent des flasques (4) et (5) transversaux, dont la partie supérieure est agencée pour recevoir et maintenir les extrémités de la bande de protection, dans un plan en prolongement de la position de tenue de la bande entre les bords supérieurs du corps.

9. Module linéaire avec dispositif d'étanchéité selon la revendication 8, caractérisé en ce que la bande présente une capacité élastique de fixation.

10. Module linéaire avec dispositif d'étanchéité selon la revendication 7, caractérisé en ce que les joints d'étanchéité (14 - 15) sont constitués par une bande raboutée ayant une capacité élastique de déformation, ladite bande étant fixée par tous moyens sur la périphérie du trainard pour venir en contact sur la bande d'étanchéité et le profil supérieur du corps.

11. Module linéaire avec dispositif d'étanchéité selon la revendication 1, caractérisé en ce que la bande de protection est agencée intérieurement avec un ou plusieurs inserts de renforcement, ces inserts pouvant être des câbles, fibres, matériaux composites ou autres.

## Patentansprüche

1. Linearer Führungsmodul mit Schutzabdeckung, bestehend aus einem Profilkörper (1) großer Länge, der innen eine Führungsvorrichtung für die kontrollierte Bewegung eines Profilschlittens (3) besitzt, dessen oberer Teil außen über den vorgenannten Körper hinausragt und der Teile bzw. Zubehör aufnehmen kann, wobei ein Schutzstreifen (2) an der oberen Fläche des Körpers angeordnet ist, um in Verbindung mit der Schlittenbewegung einen Schutz der im Innern des Körpers angeordneten Mechanismen zu gewährleisten, während der Schlitten im unteren Teil so ausgebildet ist, daß er mit einer Vorrichtung für seine kontrollierte und begrenzte Verschiebung zusammenwirkt, und im oberen Teil auf seiner ganzen Länge eine Profilöffnung aufweist, um die Passage, Führung und Ausrichtung des Schutz- und Abdeckstreifens zu ermöglichen, wobei der Streifen mit den Enden an den äußersten Teilstücken des Modulkörpers befestigt ist und in einer waagrechten Ebene ausgebreitet wird, dadurch gekennzeichnet, daß der Schlitten innen in der Profilöffnung Vorrichtungen besitzt, die das Verwinden, Senkrecht- oder Schrägstellen des Streifens auf dem größten Teil der Schlittenlänge ermöglichen.

2. Linearer Führungsmodul mit Schutzabdeckung nach Anspruch 1, dadurch gekennzeichnet, daß die Enden des Schutz- und Abdeckstreifens in Profilen an den Außenrändern des Körpers, die einen Schlitz für den Durchlauf des Schlittens umgrenzen, eingespannt und festgehalten sind.

3. Linearer Führungsmodul mit Schutzabdeckung nach Anspruch 1, dadurch gekennzeichnet, daß der obere Teil des Schlittens eine Profilöffnung zur Durchführung des Streifens aufweist, die mehrere Innenabschnitte besitzt, um die Durchführung und Formanpassung des Schutzstreifens von einer waagrechten in eine senkrechte bzw. schräge Ebene zu ermöglichen.

4. Linearer Führungsmodul mit Schutzabdeckung nach Anspruch 3, dadurch gekennzeichnet, daß in den einzelnen Abschnitten der Profilöffnung rollenförmige Vorrichtungen angeordnet sind, wobei Rollen (8) (9) waagrecht angeordnet und die Drehachsen (8-1) (9-1) in entsprechenden Sitzen im Schlitten gelagert sind und die besagten Rollen (8) (9) sich im vorderen und hinteren Teil des Schlittens befinden; und dadurch gekennzeichnet, daß Rollen (11-12) in den Profilabschnitten der Öffnung innerhalb des Schlittens senkrecht angeordnet sind, um das Verwinden des Schutz- und Abdeckstreifens und dessen Senkrecht- und Schrägstellung zu ermöglichen.

5. Linearer Führungsmodul mit Schutzabdeckung nach Anspruch 3, dadurch gekennzeichnet, daß die Rollen (8) (9) (11) (12) ein Außenprofil besitzen, das dem Profil des Schutz- und Abdeckstreifens entspricht.

6. Linearer Führungsmodul mit Schutzabdeckung nach Anspruch 1, dadurch gekennzeichnet, daß der Schlitten im Innern des Modulkörpers mit einem Sockelteil ausgebildet ist, das sich durch eine den Enden der oberen Ränder des Modulkörpers gegenüberliegende Einengung (3-3) sowie mit dem oberen Teil bis auf die Außenseite des Modulkörpers fortsetzt, um Teile und Zubehör aufzunehmen und darzubieten; und dadurch gekennzeichnet, daß im mittleren Teil des Schlittens die Profilöffnung für die Durchführung des Schutz- und Abdeckstreifens angeordnet ist; und dadurch gekennzeichnet, daß der Basisteil des Schlittens so ausgebildet ist, um mit einer Vorrichtung zum Verschieben in den Modulkörper hinein zusammenzuwirken.

7. Linearer Führungsmodul mit Schutzabdeckung nach Anspruch 1, dadurch gekennzeichnet, daß zusätzliche Abdeckvorrichtungen (14) (15) zum einen in Längsrichtung zwischen dem oberen überstehenden Teil des Schlittens und dem oberen Modulkörper und zum anderen in Querrichtung zwischen dem oberen Teil des Schlittens und dem Schutzstreifen angeordnet sind.

8. Linearer Führungsmodul mit Schutzabdeckung nach Anspruch 1, dadurch gekennzeichnet, daß die äußersten Teile des Körpers querliegende Flansche (4) und (5) beinhalten, deren oberer Teil so ausgebildet ist, daß sie die Enden des Schutzstreifens in Verlängerung der Ebene, in der der Streifen zwischen den oberen Rändern des Körpers gehalten wird, aufnehmen und festhalten können.

9. Linearer Führungsmodul mit Schutzabdeckung nach Anspruch 8, dadurch gekennzeichnet, daß der Streifen elastisch fixierbar ist.

10. Linearer Führungsmodul mit Schutzabdeckung nach Anspruch 7, dadurch gekennzeichnet, daß die Dichtelemente (14 - 15) aus einem angesetzten Streifen bestehen, der elastisch verformbar ist, wobei der besagte Streifen durch alle denkbaren Vorrichtungen am Rand des Schlittens befestigt ist, um mit dem Abdeckstreifen und dem oberen Profil des Körpers in Berührung zu kommen.

11. Linearer Führungsmodul mit Schutzabdeckung nach Anspruch 1, dadurch gekennzeichnet, daß der Schutzstreifen innen ein oder zwei eingesetzte Verstärkungen besitzt, wobei es sich bei diesen Einsätzen um Kabel, Fasern, Verbundwerkstoffe oder sonstige handeln kann.

## Claims

1. Linear guide module with a protective covering of a type comprising a long profiled body (1) that internally accommodates guiding means allowing the controlled displacement of a profiled table saddle (3) the upper part of which externally overhangs the above-mentioned body and is capable of accommodating pieces and accessories, a protective belt (2) being placed on the upper surface of the body to afford, in conjunction with displacement of the table saddle, protection of the mechanisms inside the body, the lower part of the table saddle being designed to cooperate with a means that ensures its controlled, limited displacement, the upper part of said table saddle being designed with a profiled opening over its entire length to allow the passage, guiding and orientation of the protective sealing belt, the ends of said belt being attached to the extreme parts of the body of the module and arranged in a horizontal plane, characterized in that the table saddle has internal means in the profiled opening to allow twisting and vertical or oblique positioning of the belt over most of the length of the table saddle.

2. Linear module with a protective covering as claimed in claim 1, characterized in that the ends of the protective sealing belt are engaged and held in the profiles formed along the outer edges of the body defining a slot through which the table saddle passes.

3. Linear module with a protective covering as claimed in claim 1, characterized in that the upper part of the table saddle has a profiled opening through which the belt passes with various internal cross-sections in order to allow the passage and shaping of the protective belt from a horizontal plane to a vertical or oblique plane.

4. Linear module with a protective covering as claimed in claim 3, characterized in that means in the form of rollers are placed in the various cross sections of the profiled opening, rollers (8) (9) being arranged horizontally with rotation shafts (8-1) (9-1) being inserted in recesses in the table saddle, said rollers (8) (9) being located in the front part and the rear part of the table saddle, and in that rollers (11-12) are arranged vertically in the profiled cross-sections of the opening inside the table saddle to allow twisting of the protective sealing belt and its vertical or oblique positioning.

5. Linear module with a protective covering as claimed in claim 3, characterized in that rollers (8) (9) (11) (12) have an external profile that matches the profile of the protective sealing belt.

6. Linear module with a protective covering as claimed in claim 1, characterized in that the table saddle is designed with a lower base situated inside the body of the module and extended by a narrow section (3-3) placed opposite the ends of the upper edges of the body of the module with its upper part extending outside the body of the module to accommodate and present the pieces and accessories, and in that the profiled opening for the passage of the protective sealing belt is situated in the intermediate part of the table saddle, and in that the lower base of the table saddle is designed to cooperate with a means that ensures its translation in the body of the module.

7. Linear module with a protective covering as claimed in claim 1, characterized in that matching sealing means (14) (15) are situated on the one hand longitudinally between the upper overhanging part of the table saddle and the upper body of the module and, on the other hand, transversely between the upper part of the table saddle and the protective belt.

8. Linear module with a protective covering as claimed in claim 1, characterized in that the extreme parts of the body include transverse end shields (4) and (5) the upper part of which is designed to accommodate and secure the ends of the protective belt in a plane that extends the position in which the belt is held between the upper edges of the body.

9. Linear module with a protective covering as claimed in claim 8, characterized in that the belt has the ability to be elastically mounted.

10. Linear module with a protective covering as claimed in claim 7, characterized in that the seals (14-15) consist of a butt-jointed belt that is capable of elastic deformation, said belt being attached by any means over the periphery of the table saddle so that it is in contact with the sealing belt and the upper profile of the body.

11. Linear module with a protective covering as claimed in claim 1, characterized in that the protective belt is internally designed with one or more reinforcing inserts, these inserts may be wires, fibres, composite materials or other.
